# EUROPÄISCHE PATENTSCHRIFT

(11) **EP 1 402 384 B1**
(45) Veröffentlichungstag und Bekanntmachung des Hinweises auf die Patenterteilung: **14.12.2005**
(21) Anmeldenummer: 02748569.7
(22) Anmeldetag: 06.06.2002
(51) Int. Cl.: G06F 13/42

(54) **SCHNITTSTELLE ZUR DATENÜBERTRAGUNG**
INTERFACE FOR DATA TRANSMISSION
INTERFACE POUR TRANSMISSION DE DONNEES

(30) Priorität: 26.06.2001 DE 10130797
(43) Veröffentlichungstag der Anmeldung: 31.03.2004
(73) Patentinhaber: Infineon Technologies AG, 81669 München (DE)
(72) Erfinder: GERSEMSKY, Frank, 44789 Bochum (DE); POTT, Rüdiger, 46535 Dinslaken (DE)
(74) Vertreter: Graf Lambsdorff, Matthias
(86) Internationale Anmeldenummer: PCT/DE2002/002064
(87) Internationale Veröffentlichungsnummer: WO 2003/003231

(56) Entgegenhaltungen:
- US-A- 4 727 370
- US-A- 5 280 584
- ANDREW J MCCUBBIN: "SONY PLAYSTATION CONTROLLER INFORMATION" [Online] 13. August 1998 (1998-08-13) XP002216826 Gefunden im Internet: <URL: http://www.gamesx.com/controldata/psxcont/ psxcont.htm> [gefunden am 2002-10-15] Seite 1 -Seite 2
- PASI OJALA: "Burst Fastloader for C64" [Online] 8. Januar 2000 (2000-01-08) XP002216827 Gefunden im Internet: <URL: http://www.cs.tut.fi/~albert/Dev/burst/> [gefunden am 2002-10-15] Seite 1

## Beschreibung

Die Erfindung bezieht sich generell auf Systeme zum Erzeugen und/oder Verarbeiten von Datenbursts. Die Erzeugung und/oder Verarbeitung der Datenbursts erfolgt dabei in einer Mehrzahl von Modulen. Insbesondere betrifft die Erfindung eine Schnittstelle zwischen zwei benachbarten Modulen, über die ein Daten- und Informationsaustausch stattfindet.

Mittels eines derartigen Systems können einerseits Datenbursts erzeugt werden, die anschließend schnurlos an einen Empfänger ausgesendet werden, und andererseits Datenbursts, die zuvor schnurlos empfangen wurden, verarbeitet werden. Das System weist zu diesem Zweck Module auf, wobei zwischen benachbarten Modulen Daten ausgetauscht werden können. Jedes der Module erfüllt eine andere Aufgabe. Beispielsweise können die Module zur Verschlüsselung oder Entschlüsselung von Daten oder zur Erzeugung eines CRC-Kontrollbitmusters (Cyclic Redundancy Check) am Ende eines Datenpakets dienen.

Bisherige Systeme der vorstehend beschriebenen Art weisen entweder einen vollständig festverdrahteten Aufbau auf oder enthalten sowohl Software-gesteuerte Module als auch festverdrahtete Module, die für zeitaufwendige Verarbeitungsschritte, wie z.B. einen Scrambler, eingesetzt werden. Nachteilig an einer reinen Hardware-Lösung ist eine begrenzte Konfigurationsmöglichkeit der einzelnen Module und eine fehlende Flexibilität bei der Zusammenstellung der Module durch die feste Verdrahtung der Module untereinander. Der Nachteil einer aus Software- und Hardware-Modulen bestehenden Lösung ist, daß die Datenverarbeitungsrate des Systems durch die Datenverarbeitungsrate des Prozessors, welcher die Daten den einzelnen Modulen zuweist und sie anschließend wieder aus ihnen auskoppelt, limitiert ist.

In der Schrift "SONY PLAYSTATION CONTROLLER INFORMATION" von Andrew J. McCubbin, erhältlich im Internet unter der Adresse http://www.gamesx.com/controldata/psxcont/psxcont.htm, ist ein System zum Erzeugen und/oder Verarbeiten von Datenbursts beschrieben, bei welchem zwischen zwei Modulen Daten ausgetauscht werden. Eine Datenübertragung wird dem Empfangsmodul von dem Sendemodul mittels eines Signals ATT mitgeteilt. Den Empfang von Daten teilt das Empfangsmodul dem Sendemodul mittels eines Signals ACK mit.

In der Schrift "Burst Fastloader for C64" von Pasi Ojala, erhältlich im Internet unter der Adresse http://www.cs.tut.fi/{albert/Dev/burst/, wird ebenfalls ein System zum Erzeugen und/oder Verarbeiten von Datenbursts beschrieben.

Aufgabe der Erfindung ist es, ein System zum Erzeugen und/oder Verarbeiten von Datenbursts mit mindestens zwei seriell geschalteten Modulen zu schaffen, welches sowohl eine hohe fehlende Flexibilität bei der Zusammenstellung der Module als auch eine hohe Datenverarbeitungsrate sowie eine hohe Datenübertragungssicherheit aufweist. Insbesondere zielt die Erfindung darauf ab, eine Schnittstelle zwischen zwei benachbarten Modulen des Systems anzugeben, durch welche ein eventueller Datenverlust bei der Datenübertragung zwischen den beiden Modulen verhindert wird.

Die der Erfindung zugrundeliegende Aufgabenstellung wird durch die Merkmale der unabhängigen Patentansprüche gelöst. Vorteilhafte Weiterbildungen und Ausgestaltungen sind in den Unteransprüchen angegeben.

Ein erfindungsgemäßes System, mittels welchem sich Datenbursts erzeugen und/oder verarbeiten lassen, umfaßt ein erstes Modul und ein zu dem ersten Modul benachbartes zweites Modul, zwischen welchen mittels erster Sendemittel des ersten Moduls und mittels erster Empfangsmittel des zweiten Moduls Daten übertragen werden. Des weiteren enthält das erste Modul zweite Sendemittel sowie dritte Empfangsmittel, und das zweite Modul enthält zweite Empfangsmittel sowie dritte Sendemittel. Ein wesentlicher Gedanke der Erfindung liegt darin, daß mit den zweiten Sende- und Empfangsmitteln Informationen über die Gültigkeiten der Daten, welche mit den ersten Sende- und Empfangsmitteln übertragen werden, ausgetauscht werden. Mit den dritten Sende- und Empfangsmitteln werden dem ersten Modul von dem zweiten Modul Informationen übermittelt, aus denen hervorgeht, ob das zweite Modul die von dem ersten Modul ausgesandten gültigen Daten empfangen hat.

Das erste Modul enthält zusätzlich vierte Sendemittel und das zweite Modul enthält vierte Empfangsmittel. Die vierten Sende- und Empfangsmittel dienen zur Übermittlung von Informationen an das zweite Modul über einen eventuellen Abschluß einer Datenübertragung. Insbesondere können sich diese Informationen auf den Abschluß der Übertragung eines Datenpakets beziehen. Die beschriebene Maßnahme trägt zu einer Erhöhung der Übertragungssicherheit des erfindungsgemäßen Systems bei. Ein weiterer Vorteil dieser Maßnahme besteht darin, daß sie eine besondere Behandlung des Endes eines Datenpakets ermöglicht. Beispielsweise wird in einem Modul, welches eine CRC-Einheit (Cyclic Redundancy Check) enthält, eine Checksumme an das Datenpaket angehängt bzw. von ihm entfernt. Außerdem löst in der Regel das Ende eines Datenpakets einen Interrupt an einen zugehörigen Prozessor aus.

Das erfindungsgemäße System erlaubt es beispielsweise, die Module hardwaremäßig untereinander zu verbinden. Dabei ist die Art der Verbindung vorzugsweise durch eine Software bestimmt. Die Software legt die Verbindungen zwischen den Modulen durch Setzen von Registern fest und ist somit am Datentransport selbst nicht beteiligt. Dieses ermöglicht sowohl eine hohe Flexibilität bei der Wahl des Verarbeitungswegs, den die Daten durch die Module durchlaufen, als auch eine hohe Datenverarbeitungsrate, da die Software an der Übermittlung der Daten zwischen den Modulen lediglich indirekt beteiligt ist.

Ein weiterer Vorteil des erfindungsgemäßen Systems liegt in dem Informationsaustausch zwischen den zwei benachbarten Modulen. Da sowohl das erste Modul dem zweiten Modul die Information zukommen läßt, ob die zu dem jeweiligen Zeitpunkt übertragenen Daten gültig sind, als auch das zweite Modul dem ersten Modul die Information zukommen läßt, ob die übertragenen gültigen Daten auch empfangen wurden, erhalten beide Module stets von dem jeweils anderen Modul eine Status- bzw. Rückmeldung über die soeben ausgeführte Übertragung. Dadurch werden Datenverluste vermieden. Ebenso können Zeiten, die das zweite Modul zur Verarbeitung der Daten benötigt, durch die Erfindung besser berücksichtigt werden. Beispielsweise kann vorgesehen sein, daß erst weitere Datenübertragungen stattfinden, sobald das zweite Modul dem ersten Modul durch die entsprechende Informationsübertragung seine Bereitschaft dazu signalisiert hat.

Zur Synchronisation des Daten- und Informationsaustauschs zwischen den Modulen ist es vorteilhaft eine Taktgebereinheit einzusetzen, welche beispielsweise ein Taktsignal mit einem Takt von 26 MHz erzeugt.

Das Taktsignal kann beispielsweise ein binäres Rechtecksignal sein. Es kann vorteilhafterweise vorgesehen sein, daß die Übertragung von Daten und/oder Informationen mit einer Änderung des binären Rechtecksignals von einem Bit0-Zustand in einen Bit1-Zustand oder von einem Bit1-Zustand in einen Bit0-Zustand beginnt und endet.

Des weiteren sind vorteilhafterweise die übertragenen Daten digitale Daten, und sämtliche ausgetauschte Informationen weisen binäre Zustände, wie z.B. Bit0- und Bit1-Zustände, auf.

Bei den bisherigen Ausführungen wurde lediglich der Fall behandelt, daß die Datenübertragung von dem ersten Modul zu dem zweiten Modul erfolgt. Es kann allerdings auch vorgesehen sein, daß Datenübertragungen zwischen dem ersten und dem zweiten Modul in beide Richtungen stattfinden. In diesem Fall müssen beide Module die entsprechenden Sende- und Empfangsmittel zur Übertragung von Daten und Informationen aufweisen.

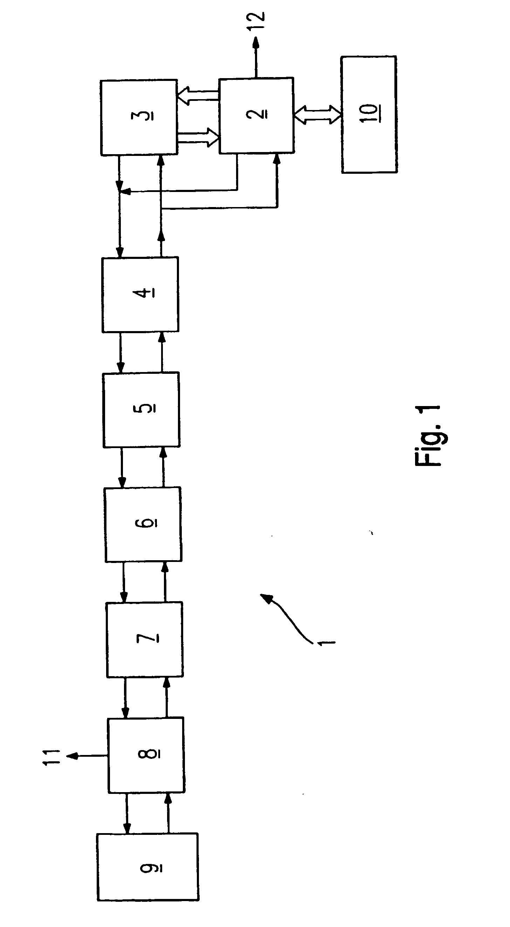

Die Module des erfindungsgemäßen Systems können beispielsweise aus Modulen, wie sie nachstehend in der Beschreibung zu Fig. 1 erläutert werden, ausgewählt werden. Dabei ist es besonders vorteilhaft, sämtliche Module des erfindungsgemäßen Systems auf einem gemeinsamen festen Substrat zu integrieren. Da das erfindungsgemäße System durch serielle Schnittstellen zwischen den einzelnen Modulen gekennzeichnet ist, benötigt das erfindungsgemäße System bei einer Integrierung auf einem gemeinsamen festen Substrat weniger Platz im Vergleich zu bisherigen Systemen der gleichen Art.

Eine bevorzugte Anwendung des vorliegenden Systems bieten Geräte, mit denen Datenbursts schnurlos versendet sowie empfangen werden. Aufgrund der hohen Flexibilität des erfindungsgemäßen Systems können auf ihm Protokolle, die auf unterschiedlichen Standards, wie z.B. Bluetooth, DECT oder HomeRF, basieren, realisiert werden.

Ein weiterer Aspekt der Erfindung betrifft ein Verfahren zur Daten- und Informationsübertragung innerhalb eines Systems, welches dem vorstehend beschriebenen System entspricht. Dabei werden Daten und Informationen über die Gültigkeit der Daten von dem ersten Modul zu dem zweiten Modul übertragen. In umgekehrter Richtung erhält das erste Modul von dem zweiten Modul Informationen darüber, ob gültige Daten empfangen wurden.

Das erfindungsgemäße Verfahren weist den Vorteil auf, daß jedes der beiden Module eine Meldung über den Status der gegenwärtigen Aussendung bzw. eine Rückmeldung über den gegenwärtigen Empfang an das jeweils andere Modul übermittelt. Durch einen derartigen gegenseitigen Informationsaustausch wird die Sicherheit gegen Datenverluste erhöht. Des weiteren können die Module weitere Datenübertragungen mit dem gegenwärtigen Verarbeitungszustand des jeweils anderen Moduls abstimmen.

Die Erfindung wird nachfolgend in beispielhafter Weise unter Bezugnahme auf die Zeichnungen näher erläutert. In diesen zeigen:
- Fig. 1: eine schematische Darstellung eines Ausführungsbeispiels des erfindungsgemäßen Systems zum Erzeugen und/oder Verarbeiten von Datenbursts;
- Fig. 2: eine schematische Darstellung einer Schnittstelle zwischen zwei benachbarten Modulen eines Ausführungsbeispiels des erfindungsgemäßen Systems; und
- Fig. 3: Schemata zur Übertragung von Daten und Informationen zwischen zwei benachbarten Modulen eines Ausführungsbeispiels des erfindungsgemäßen Systems.

In Fig. 1 ist ein System 1 gezeigt, mittels welchem einerseits Datenbursts erzeugt werden können, die anschließend schnurlos an einen Empfänger ausgesandt werden, und andererseits Datenbursts, die zuvor schnurlos empfangen wurden, verarbeitet werden können. Das System 1 weist zu diesem Zweck seriell geschaltete Module 2 bis 9 auf, wobei zwischen benachbarten Modulen Daten ausgetauscht werden können. Dieses ist in Fig. 1 durch die entsprechenden Pfeile dargestellt. Zur Erzeugung eines Datenbursts wird das System 1 von Modul 2 entlang der Pfeile nach Modul 9 durchlaufen. Im umgekehrten Fall kann ein Datenburst, welcher zuvor empfangen wurde, verarbeitet werden, indem das System 1 von Modul 9 nach Modul 2 hin durchlaufen wird. Jedes der Module 3 bis 7 kann-wahlweise auch deaktiviert werden, so daß das betreffende Modul an der Erzeugung bzw. Verarbeitung der Datenbursts in diesem Fall nicht beteiligt ist.

Bei der Erzeugung eines Datenbursts bezieht das Modul 2, welches eine DMA-Einheit (Direct Memory Access) enthält, die für den Datenburst benötigten Daten von einer Speichereinheit 10. Danach werden die Daten wahlweise entweder an das Modul 3 und anschließend an das Modul 4 oder direkt an das Modul 4 transferiert. Das Modul 3 ist ein CVSD-Codierer (Continuous Variable Slope Delta). Bei einer CVSD-Codierung werden analoge Sprachsignale in einen digitalen Datenstrom umgewandelt. Anstelle des CVSD-Codierers kann das Modul 3 auch andere Sprachcodierer, wie beispielsweise eine ADPCM-Einheit (Adaptive Delta Pulse Code Modulator), enthalten. Das Modul 4 ist ein CRC-Generator (Cyclic Redundancy Check). Der CRC-Generator fügt beispielsweise einem auszusendenden Datenpaket oder Datenburst ein Kontrollbitmuster hinzu, anhand dessen empfängerseitig Übertragungsfehler erkannt und gegebenenfalls auch korrigiert werden können. Das Modul 5 dient zur Verschlüsselung der Daten. Das dem Modul 5 nachgeschaltete Modul 6 enthält einen Scrambler (Data Whitening), welcher digitale Daten verschlüsselt, indem er sie in ein Pseudo-Zufallssignal umsetzt. Mittels eines entsprechenden Codes wird das Pseudo-Zufallssignal empfängerseitig wieder entschlüsselt. Das Modul 7 bewirkt eine weitere Maßnahme zur Fehlererkennung und Fehlerkorrektur durch ein FEC-Verfahren (Forward Error Correction). Anschließend gelangen die Daten in das Modul 8, welches einen FIFO-Speicher (First in - First out) enthält. Jedes der Module 4 bis 7 kann auch deaktiviert werden. Ein deaktiviertes Modul wird von den Daten durchlaufen, ohne daß das deaktivierte Modul die Daten in der vorgegebenen Weise bearbeitet. Dieses Vorgehen ist notwendig, um die verschiedenen Teile eines Datenpakets, wie z.B. den Access Code, den Datenpaketkopf oder den Nutzdatenteil, generieren zu können. Sobald ein komplettes Datenpaket in dem Modul 8 zwischengespeichert ist, teilt das Modul 8 einem zugehörigen Prozessor dieses durch einen Interrupt 11 mit. Dadurch wird der Prozessor veranlaßt, das in dem Modul 8 befindliche Datenpaket an das Modul 9 weiterzuleiten, von wo es an einen zugehörigen Empfänger ausgesandt wird. Währenddessen konfiguriert der Prozessor außerdem die Module 3 bis 7 für die Erzeugung des nächsten Datenpakets.

Beim Empfang eines Datenpakets oder Datenbursts wird die Sequenz der Module 2 bis 9 in umgekehrter Reihenfolge zu der vorstehend beschriebenen Reihenfolge durchlaufen. Dabei führen die Module 3 bis 7 jeweils eine Funktion aus, welche invers zu ihrer vorstehend beschriebenen Funktion ist. Beispielsweise dient das Modul 5 nunmehr der Entschlüsselung der Daten eines empfangenen Datenpakets anstelle der vorstehend beschriebenen Verschlüsselung der auszusendenden Daten. Nach der Verarbeitung der empfangenen Daten wird das verarbeitete Datenpaket in der Speichereinheit 10 zwischengespeichert. Sobald das letzte Bit des verarbeiteten Datenpakets zwischengespeichert ist, wird von der DMA-Einheit des Moduls 2 ein Interrupt 12 erzeugt, woraufhin mit der Verarbeitung des nächsten im FIFO-Speicher des Moduls 8 wartenden Datenpakets begonnen wird.

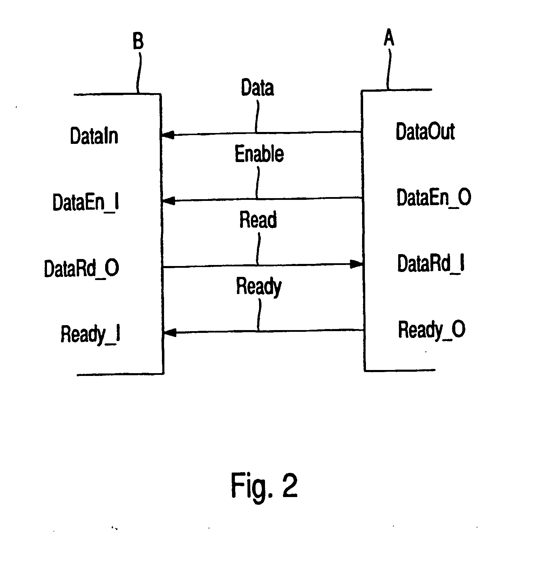

In Fig. 2 ist schematisch eine Schnittstelle zwischen einem Modul A und einem dazu benachbarten Modul B eines Ausführungsbeispiels des erfindungsgemäßen Systems dargestellt. Bei den Modulen A und B kann es sich beispielsweise um zwei der in Fig. 1 gezeigten Module 2 bis 9 handeln. Von einem Ausgang DataOut des Moduls A werden digitale Daten Data zu einem Eingang DataIn des Moduls B übertragen. Sofern die übertragenen Daten Data gültig sind, teilt das Modul A dieses dem Modul B mittels einer Information Enable mit. Zu diesem Zweck weisen das Modul A einen Ausgang DataEn_O und das Modul B einen Eingang DataEn_I auf. Bei einem erfolgreichen Empfang gültiger Daten Data durch das Modul B signalisiert das Modul B dieses dem Modul A durch eine Information Read, welche zwischen einem Ausgang DataRd_O des Moduls B und einem Eingang DataRd_I des Moduls A übertragen wird. Nachdem das letzte gültige Bit eines Datenpakets von dem Modul A zu dem Modul B übertragen wurde und dieses Bit von dem Modul B gelesen wurde, signalisiert eine von dem Modul A ausgesandte Information Ready dem Modul B, daß die Datenübertragung vorläufig beendet ist. Die Zeitspanne bis zur nächsten Datenübertragung wird zur Generierung eines neuen Datenpakets benötigt.

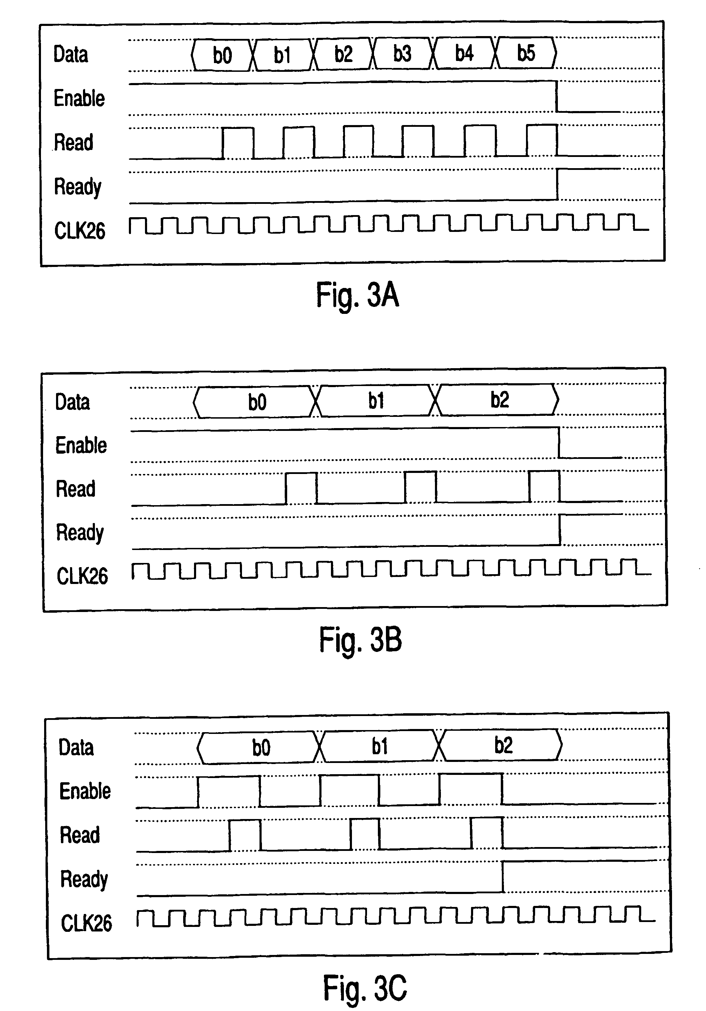

In den Fig. 3A, 3B und 3C sind schematisch verschiedene Daten- und Informationsübertragungen zwischen den Modulen A und B gezeigt. Die übertragenen Daten Data sind Bitfolgen, die sich aus Bits bi (i = 1, 2, 3,...) zusammensetzen. Die Informationen Enable, Read und Ready, die zwischen den Modulen A und B ausgetauscht werden, weisen entweder einen Bit0- oder einen Bit1-Zustand auf. Vorzugsweise steht das erfindungsgemäße System mit einer Taktgebereinheit in Verbindung, welche beispielsweise wie in dem vorliegenden Ausführungsbeispiel ein rechteckförmiges Taktsignal CLK26 mit einer Frequenz von 26 MHz erzeugt, welches ebenfalls einen Bit0- oder einen Bit1-Zustand annehmen kann. Die an den jeweiligen Ausgängen der Module A und B auskoppelbaren Informationen Enable, Read und Ready ändern ihre Zustände nur bei einer ansteigenden Flanke des Taktsignals CLK26. Die an den Eingängen der Module A und B empfangenen Informationen Enable, Read und Ready werden ebenfalls nur bei einer ansteigenden Flanke des Taktsignals CLK26 gelesen.

In den Fig. 3A bis 3C ist gezeigt, daß die Information Enable bei einer gültigen Übertragung der Daten Data von dem Modul A in einem Bit1-Zustand ausgegeben wird. Sofern das Modul B sowohl ein Bit bi der Daten Data gelesen hat als auch die Information Enable im Bit1-Zustand empfängt, teilt das Modul B dem Modul A den Empfang eines gültigen Bits bi dadurch mit, daß es als Information Read einen kurzen Puls im Bit1-Zustand aussendet.

Während einer Übertragung gültiger Bits bi beläßt das Modul A die Information Enable im Bit1-Zustand, solange es innerhalb des nächsten Zyklus des Taktsignals CLK26 neue gültige Daten Data übermitteln kann. Sobald jedoch ungültige oder keine Daten übersandt werden, wird die Information Enable auf den Bit0-Zustand gesetzt. Beispielsweise ist in Fig. 3C gezeigt, daß nachdem das Bit b0 vom Modul B während eines Bit1-Zustands der Information Enable gelesen wurde, die Information Enable von dem Modul A wieder auf den Bit0-Zustand zurückgesetzt wird. Dadurch wird dem Modul B signalisiert, daß innerhalb des nächsten Zyklus des Taktsignals CLK26 keine gültigen Daten Data versendet werden.

Nachdem das letzte gültige Bit bi eines Datenpakets, welches beispielsweise in Fig. 3A die Bits b0 bis b5 enthält, übertragen wurde und von dem Modul B gelesen wurde, wird die Information Ready auf den Bit1-Zustand gesetzt. Dadurch wird dem Modul B signalisiert, daß die Datenübertragung vorerst unterbrochen oder beendet ist.

In Fig. 3A ist die maximale Datenübertragungsrate des vorliegenden Ausführungsbeispiels gezeigt. Bei einem 26 MHz-Taktsignal kann innerhalb von zwei Zyklen des Taktsignals CLK26 ein Bit bi übertragen werden. Dieses entspricht einer Datenübertragungsrate von 13 MBit/s.

Die gegenseitige Übertragung der Informationen Enable, Read und Ready zwischen den Modulen A und B gewährleistet, daß das Modul B stets über den Zustand der Datenübertragung informiert ist, und daß das Modul A stets eine Rückmeldung darüber erhält, ob ein Übertragungsschritt erfolgreich war.

## Patentansprüche

1. System (1) zum Erzeugen und/oder Verarbeiten von Datenbursts mit mindestens zwei seriell geschalteten Modulen (2, 3,..., 9), wobei zwischen einem ersten Modul (A) und einem benachbarten zweiten Modul (B) Daten- und Informationsübertragung stattfindet, und
- das erste Modul (A) erste Sendemittel (DataOut) aufweist und das zweite Modul (B) erste Empfangsmittel (DataIn) aufweist, welche zur Übertragung von Daten (Data) dienen,
- das zweite Modul (B) zweite Sendemittel (DataRd_O) aufweist und das erste Modul (A) zweite Empfangsmittel (DataRd_I) aufweist, welche zur Übertragung von Informationen (Read) über den Empfang gültiger Daten dienen, und
- das erste Modul (A) dritte Sendemittel (Ready_O) aufweist und das zweite Modul (B) dritte Empfangsmittel (Ready_I) aufweist, welche zur Übertragung von Informationen (Ready) über den Abschluß einer Datenübertragung, insbesondere über den Abschluß der Übertragung eines Datenpakets, dienen, **dadurch gekennzeichnet**, daβ
- das erste Modul (A) vierte Sendemittel (DataEN_O) aufweist und das zweite Modul (B) vierte Empfangsmittel (DataEn_I) aufweist, welche zur Übertragung von Informationen (Enable) über die Gültigkeit der Daten (Data) dienen.

2. System (1) nach Anspruch 1,
**dadurch gekennzeichnet,**
- **daß** das erste Modul (A) und das zweite Modul (B) durch feste Verdrahtungen miteinander verbunden sind, wobei Verbindungen zur Daten- und Informationsübertragung zwischen dem ersten Modul (A) und dem zweiten Modul (B) durch eine Software, welche zu diesem Zweck insbesondere Register setzt, festlegbar sind.

3. System (1) nach Anspruch 1 oder 2,
**dadurch gekennzeichnet,**
- **daß** das System mit einem von einer Taktgebereinheit erzeugten Taktsignal (CLK26), welches insbesondere einen Takt von 26 MHz aufweist, beaufschlagbar ist.

4. System (1) nach Anspruch 3,
**dadurch gekennzeichnet,**
- **daß** eine Übertragung von Daten (Data) und/oder Informationen (Enable, Read, Ready) mit einem Taktsignal (CLK26) der Taktgebereinheit beginnt und endet.

5. System (1) nach Anspruch 3 oder 4,
**dadurch gekennzeichnet,**
- **daß** das Taktsignal (CLK26) ein binäres Rechtecksignal ist.

6. System (1) nach Anspruch 5,
**dadurch gekennzeichnet,**
- **daß** eine Übertragung von Daten (Data) und/oder Informationen (Enable, Read, Ready) mit einer Änderung des binären Rechtecksignals (CLK26) von einem Bit0-Zustand in einen Bit1-Zustand oder von einem Bit1-Zustand in einen Bit0-Zustand beginnt und endet.

7. System (1) nach einem oder mehreren der vorhergehenden Ansprüche,
**dadurch gekennzeichnet,**
- **daß** die Daten (Data) Bitfolgen (bi) umfassen.

8. System (1) nach einem oder mehreren der vorhergehenden Ansprüche,
**dadurch gekennzeichnet,**
- **daß** die Informationen (Enable) über die Gültigkeit der Daten (Data) und/oder die Informationen (Read) über den Empfang gültiger Daten und/oder die Informationen (Ready) über den Abschluß einer Datenübertragung binäre Zustände aufweisen.

9. System (1) nach Anspruch 8,
**dadurch gekennzeichnet,**
- **daß** bei der Aussendung gültiger Daten durch die ersten Sendemittel (DataOut) die Informationen. (Enable) über die Gültigkeit der Daten (Data) von den vierten Sendemitteln (DataEn_O) in einem Bit1-Zustand oder in einem Bit0-Zustand ausgesendet werden.

10. System (1) nach Anspruch 9,
**dadurch gekennzeichnet,**
- **daß** beim Empfang von Daten (Data) durch die ersten Empfangsmittel (DataIn) und beim Empfang von Informationen (Enable) über die Gültigkeit der Daten (Data) in einem hohen Zustand durch die vierten Empfangsmittel (DataEn_I) als Information (Read) über den Empfang gültiger Daten von den zweiten Sendemitteln (DataRd_O) ein Puls in einem Bit1-Zustand oder in einem Bit0-Zustand ausgesendet wird.

11. System (1) nach einem oder mehreren der Ansprüche 8 bis 10,
**dadurch gekennzeichnet, daß** nach dem Abschluß der Aussendung von Daten (Data) durch die ersten Sendemittel (DataOut) und nach dem gültigen Empfang der Daten (Data) durch die ersten Empfangsmittel (DataIn) von den dritten Sendemitteln (Ready_O) die Informationen (Ready) über den Abschluß einer Datenübertragung in einem Bit1-Zustand oder in einem Bit0-Zustand gesendet werden.

12. System (1) nach einem oder mehreren der vorhergehenden Ansprüche,
**dadurch gekennzeichnet,**
- **daß** die mindestens zwei seriell geschalteten Module (2, 3, ..., 9) aus der Gesamtheit einer Liste aus Modulen auswählbar sind, die folgende Module umfaßt:
- Modul (2) zum Zugriff auf eine Speichereinheit (10), Modul (3) mit einem CVSD-Codierer und/oder CVSD-Decodierer,
Modul mit einer ADPCM-Einheit, Modul (4) mit einem CRC-Generator und/oder CRC-Verarbeiter,
Modul (5) zur Verschlüsselung und/oder Entschlüsselung von Daten (Data),
Modul (6) mit einem Scrambler und/oder Descrambler,
Modul (7) mit einer FEC-Einheit,
Modul (8) mit einem FIFO-Speicher, und
Modul (9) mit einer Einheit zum Versenden und/oder zum Empfangen von Daten (Data), wobei
- die ausgewählten Module (2, 3,...9) insbesondere auf einem gemeinsamen festen Substrat integriert sind.

13. Verfahren zur Daten- und Informationsübertragung zwischen einem ersten Modul (A) und einem benachbarten zweiten Modul (B), welche in einem System (1) zum Erzeugen und/oder Verarbeiten von Datenbursts mit mindestens zwei seriell geschalteten Modulen (2, 3,..., 9) enthalten sind, bei welchem
- Daten (Data) von dem ersten Modul (A) zu dem zweiten Modul (B) übertragen werden,
- Informationen (Read) über den Empfang gültiger Daten von dem zweiten Modul (B) zu dem ersten Modul (A) übertragen werden, und
- Informationen (Ready) über den Abschluß einer Datenübertragung, insbesondere über den Abschluß der Übertragung eines Datenpakets, von dem ersten Modul (A) zu dem zweiten Modul (B) übertragen werden, **dadurch gekennzeichnet**, daβ
- Informationen (Enable) über die Gültigkeit der Daten (Data) von dem ersten Modul (A) zu dem zweiten Modul (B) übertragen werden.

14. Verfahren nach Anspruch 13,
**dadurch gekennzeichnet,**
- **daß** das erste Modul (A) und das zweite Modul (B) durch feste Verdrahtungen miteinander verbunden sind, wobei Verbindungen zur Daten- und Informationsübertragung zwischen dem ersten Modul (A) und dem zweiten Modul (B) durch eine Software, welche zu diesem Zweck insbesondere Register setzt, bestimmt werden.

15. Verfahren nach Anspruch 13 oder 14,
**dadurch gekennzeichnet,**
- **daß** eine Taktgebereinheit ein Taktsignal (CLK26), welches insbesondere einen Takt von 26 MHz aufweist, erzeugt.

16. Verfahren nach Anspruch 15,
**dadurch gekennzeichnet,**
- **daß** eine Übertragung von Daten (Data) und/oder Informationen (Enable, Read, Ready) mit einem Taktsignal (CLK26) der Taktgebereinheit beginnt und endet.

17. Verfahren nach Anspruch 15 oder 16,
**dadurch gekennzeichnet,**
- **daß** das Taktsignal (CLK26) ein binäres Rechtecksignal ist.

18. Verfahren nach Anspruch 17,
**dadurch gekennzeichnet;**
- **daß** eine Übertragung von Daten (Data) und/oder Informationen (Enable, Read, Ready) mit einer Änderung des binären Rechtecksignals (CLK26) von einem Bit0-Zustand in einen Bit1-Zustand oder von einem Bit1-Zustand in einen Bit0-Zustand beginnt und endet.

19. Verfahren nach einem oder mehreren der Ansprüche 13 bis 18,
**dadurch gekennzeichnet,**
- **daß** die Daten (Data) Bitfolgen (bi) umfassen.

20. Verfahren nach einem oder mehreren der Ansprüche 13 bis 19,
**dadurch gekennzeichnet,**
- **daß** die Informationen (Enable) über die Gültigkeit der Daten (Data) und/oder die Informationen (Read) über den Empfang gültiger Daten und/oder die Informationen (Ready) über den Abschluß einer Datenübertragung binäre Zustände aufweisen.

21. Verfahren nach Anspruch 20,
**dadurch gekennzeichnet,**
- **daß** bei der Aussendung gültiger Daten durch das erste Modul (A) die Informationen (Enable) über die Gültigkeit der Daten (Data) von dem ersten Modul (A) in einem Bit1-Zustand oder in einem Bit0-Zustand ausgesendet werden.

22. Verfahren nach Anspruch 21,
**dadurch gekennzeichnet,**
- **daß** beim Empfang von Daten (Data) durch das zweite Modul (B) und beim Empfang von Informationen (Enable) über die Gültigkeit der Daten (Data) in einem hohen Zustand durch das zweite Modul (B) als Information (Read) über den Empfang gültiger Daten von dem zweiten Modul (B) ein Puls in einem Bit1-Zustand oder in einem Bit0-Zustand ausgesendet wird.

23. Verfahren nach einem oder mehreren der Ansprüche 20 bis 22,
**dadurch gekennzeichnet,**
- **daß** nach dem Abschluß der Aussendung von Daten (Data) durch das erste Modul (A) und nach dem gültigen Empfang der Daten (Data) durch das zweite Modul (B) von dem ersten Modul (A) die Informationen (Ready) über den Abschluß einer Datenübertragung in einem Bit1-Zustand oder in einem Bit0-Zustand gesendet werden.

24. Verfahren nach einem oder mehreren der Ansprüche 13 bis 23,
**dadurch gekennzeichnet,**
- **daß** die mindestens zwei seriell geschalteten Module (2, 3,..., 9) aus der Gesamtheit einer Liste aus Modulen auswählbar sind, die folgende Module umfaßt:
- Modul (2) zum Zugriff auf eine Speichereinheit (10),
Modul (3) mit einem CVSD-Codierer und/oder CVSD-Decodierer,
Modul mit einer ADPCM-Einheit,
Modul (4) mit einem CRC-Generator und/oder CRC-Verarbeiter,
Modul (5) zur Verschlüsselung und/oder Entschlüsselung von Daten (Data),
Modul (6) mit einem Scrambler und/oder Descrambler,
Modul (7) mit einer FEC-Einheit,
Modul (8) mit einem FIFO-Speicher, und
Modul (9) mit einer Einheit zum Versenden und/oder zum
Empfangen von Daten (Data), wobei
- die ausgewählten Module (2, 3,...9) insbesondere auf einem gemeinsamen festen Substrat integriert sind.

## Claims

1. System (1) for production and/or processing of data bursts having at least two series-connected modules (2, 3, ..., 9), with data and information being transmitted between a first module (A) and an adjacent second module (B), and
- the first module (A) having first transmission means (DataOut) and the second module (B) having first reception means (DataIn), which are used for transmission of data (Data),
- the second module (B) having second transmission means (DataRd_O) and the first module (A) having second reception means (DataRd_I), which are used for transmission of information (Read) relating to the reception of valid data, and
- the first module (A) having third transmission means (Ready_O) and the second module (B) having third reception means (Ready_I), which are used for transmission of information (Ready) relating to the completion of a data transmission, in particular relating to the completion of the transmission of a data packet, **characterized in that**
- the first module (A) has fourth transmission means (DataEn_O) and the second module (B) has fourth reception means (DataEn_I), which are used for transmission of information (Enable) relating to the validity of the data (Data).

2. System (1) according to Claim 1,
**characterized**
- **in that** the first module (A) and the second module (B) are connected to one another by means of hard wiring, in which connections for data and information transmission between the first module (A) and the second module (B) can be defined by software which, for this purpose, in particular sets registers.

3. System (1) according to Claim 1 or 2,
**characterized**
- **in that** a clock signal (CLK26), which is produced by a clock transmitter unit and, in particular, is at a clock rate of 26 MHz, can be applied to the system.

4. System (1) according to Claim 3,
**characterized**
- **in that** the transmission of data (Data) and/or information (Enable, Read, Ready) starts and ends with a clock signal (CLK26) from the clock transmitter unit.

5. System (1) according to Claim 3 or 4,
**characterized**
- **in that** the clock signal (CLK26) is a binary square-wave signal.

6. System (1) according to Claim 5,
**characterized**
- **in that** the transmission of data (Data) and/or information (Enable, Read, Ready) starts and ends with a change in the binary square-wave signal (CLK26) from a bit0 state to a bit1 state, or from a bit1 state to a bit0 state.

7. System (1) according to one or more of the preceding claims,
**characterized**
- **in that** the data (Data) comprises bit strings (bi).

8. System (1) according to one or more of the preceding claims,
**characterized**
- **in that** the information (Enable) relating to the validity of the data (Data) and/or the information (Read) relating to the reception of valid data and/or the information (Ready) relating to the completion of a data transmission have/has binary states.

9. System (1) according to Claim 8,
**characterized**
- **in that**, when the first transmission means (DataOut) transmits valid data, the information (Enable) relating to the validity of the data (Data) is transmitted from the fourth transmission means (DataEn_O) in a bit1 state or in a bit0 state.

10. System (1) according to Claim 9,
**characterized**
- **in that**, when the first reception means (DataIn) receive data (Data) and when the fourth reception means (DataEn_I) receive information (Enable) relating to the validity of the data (Data) in a high state, a pulse is transmitted in a bit1 state or in a bit0 state as information (Read) relating to the reception of valid data from the second transmission means (DataRd_O).

11. System (1) according to one or more of Claims 8 to 10,
**characterized**
- **in that**, after the completion of the transmission of data (Data) by the first transmission means (DataOut) and after the valid reception of the data (Data) by the first reception means (DataIn) from the third transmission means (Ready_O), the information (Ready) relating to the completion of a data transmission is sent in a bit1 state or in a bit0 state.

12. System (1) according to one or more of the preceding claims,
**characterized**
- **in that** the at least two series-connected modules (2, 3, ..., 9) can be selected from the totality of a list of modules which comprises the following modules:
- a module (2) for access to a memory unit (10),
a module (3) with a CVSD coder and/or CVSD decoder,
a module with an ADPCM unit,
a module (4) with a CRC generator and/or a CRC processor,
a module (5) for scrambling and/or descrambling of data (Data),
a module (6) with a scrambler and/or descrambler,
a module (7) with an FEC unit,
a module (8) with a FIFO memory, and
a module (9) with a unit for transmission and/or for reception of data (Data), with
- the selected modules (2, 3, ...9) being integrated in particular on a common fixed substrate.

13. Method for data and information transmission between a first module (A) and an adjacent second module (B), which are contained in a system (1) for production and/or processing of data bursts having at least two series-connected modules (2, 3, ..., 9), in which method:
- data (Data) is transmitted from the first module (A) to the second module (B),
- information (Read) relating to the reception of valid data is transmitted from the second module
(B) to the first module (A), and
- information (Ready) relating to the completion of a data transmission, in particular relating to the completion of the transmission of a data packet, is transmitted from the first module (A) to the second module (B), **characterized in that**
- information (Enable) relating to the validity of the data (Data) is transmitted from the first module (A) to the second module (B).

14. Method according to Claim 13,
**characterized**
- **in that** the first module (A) and the second module (B) are connected to one another by means of hard wiring, in which connections for data and information transmission between the first module (A) and the second module (B) are defined by software which, for this purpose, in particular sets registers.

15. Method according to one Claim 13 or 14,
**characterized**
- **in that** a clock transmitter unit produces a clock signal (CLK26) which, in particular, is at a clock rate of 26 MHz.

16. Method according to Claim 15,
**characterized**
- **in that** the transmission of data (Data) and/or information (Enable, Read, Ready) starts and ends with a clock signal (CLK26) from the clock transmitter unit.

17. Method according to Claim 15 or 16,
**characterized**
- **in that** the clock signal (CLK26) is a binary square-wave signal.

18. Method according to Claim 17,
**characterized**
- **in that** the transmission of data (Data) and/or information (Enable, Read, Ready) starts and ends with a change in the binary square-wave signal (CLK26) from a bit0 state to a bit1 state, or from a bit1 state to a bit0 state.

19. Method according to one or more of Claims 13 to 18,
**characterized**
- **in that** the data (Data) comprises bit strings (bi).

20. Method according to one or more of Claims 13 to 19,
**characterized**
- **in that** the information (Enable) relating to the validity of the data (Data) and/or the information (Read) relating to the reception of valid data and/or the information (Ready) relating to the completion of a data transmission have/has binary states.

21. Method according to Claim 20,
**characterized**
- **in that**, when the first module (A) transmits valid data, the information (Enable) relating to the validity of the data (Data) is transmitted from the first module (A) in a bit1 state or in a bit0 state.

22. Method according to Claim 21,
**characterized**
- **in that**, when the second module (B) receives data (Data) and when the second module (B) receives information (Enable) relating to the validity of the data (Data) in a high state, a pulse is transmitted in a bit1 state or in a bit0 state as information (Read) relating to the reception of valid data from the second module (B).

23. Method according to one or more of Claims 20 to 22,
**characterized**
- **in that**, after the completion of the transmission of data (Data) by the first module (A) and after the valid reception of the data (Data) by the second module (B) from the first module (A), the information (Ready) relating to the completion of a data transmission is sent in a bit1 state or in a bit0 state.

24. Method according to one or more of Claims 13 to 23,
**characterized**
- **in that** the at least two series-connected modules (2, 3, ..., 9) can be selected from the totality of a list of modules which comprises the following modules:
- a module (2) for access to a memory unit (10),
a module (3) with a CVSD coder and/or CVSD decoder,
a module with an ADPCM unit,
a module (4) with a CRC generator and/or a CRC processor,
a module (5) for scrambling and/or descrambling of data (Data),
a module (6) with a scrambler and/or descrambler,
a module (7) with an FEC unit,
a module (8) with a FIFO memory, and
a module (9) with a unit for transmission and/or for reception of data (Data), with
- the selected modules (2, 3, ...9) being integrated in particular on a common fixed substrate.

## Revendications

1. Système (1) pour produire et/ou traiter des salves de données ayant au moins deux modules (2, 3, ..., 9) branchés en série, une transmission de données et d'informations ayant lieu entre un premier module (A) et un deuxième module voisin (B), et
- le premier module (A) comportant des premiers moyens d'émission (DataOut) et le deuxième module (B) comportant des premiers moyens de réception (DataIn), lesquels servent à la transmission de données (Data),
- le deuxième module (B) comportant des deuxièmes moyens d'émission (DataRd_O) et le premier module (A) comportant des deuxièmes moyens de réception (DataRd_I), lesquels servent à la transmission d'informations (Read) concernant la réception de données valides, et
- le premier module (A) comportant des troisièmes moyens d'émission (Ready_O) et le deuxième module (B) comportant des troisièmes moyens de réception (Ready_I), lesquels servent à la transmission d'informations (Ready) concernant la fin d'une transmission de données, notamment la fin de la transmission d'un paquet de données,
**caractérisé par le fait que**
- le premier module (A) comporte des quatrièmes moyens d'émission (DataEn_0) et le deuxième module (B) comporte des quatrièmes moyens de réception (DataEn_I), lesquels servent à la transmission d'informations (Enable) concernant la validité des données (Data).

2. Système (1) selon la revendication 1,
**caractérisé par le fait que**
- le premier module (A) et le deuxième module (B) sont reliés entre eux par des câblages fixes, des liaisons pour la transmission de données et d'informations entre le premier module (A) et le deuxième module (B) pouvant être spécifiées par un logiciel qui affecte notamment des registres à cet effet.

3. Système (1) selon la revendication 1 ou 2,
**caractérisé par le fait que**
- le système peut être alimenté par un signal d'horloge (CLK26) qui est produit par une unité génératrice d'horloge et qui a notamment une horloge de 26 MHz.

4. Système (1) selon la revendication 3,
**caractérisé par le fait que**
- une transmission de données (Data) et/ou d'informations (Enable, Read, Ready) commence et finit avec un signal d'horloge (CLK26) de l'unité génératrice d'horloge.

5. Système (1) selon la revendication 3 ou 4,
**caractérisé par le fait que**
- le signal d'horloge (CLK26) est un signal rectangulaire binaire.

6. Système (1) selon la revendication 5,
**caractérisé par le fait que**
- une transmission de données (Data) et/ou d'informations (Enable, Read, Ready) commence et finit avec une modification du signal rectangulaire binaire (CLK26) d'un état Bit0 à un état Bit1 ou d'un état Bit1 à un état Bit0.

7. Système (1) selon une ou plusieurs des revendications précédentes,
**caractérisé par le fait que**
- les données (Data) comprennent des séquences de bits (bi).

8. Système (1) selon une ou plusieurs des revendications précédentes,
**caractérisé par le fait que**
- les informations (Enable) sur la validité des données (Data) et/ou les informations (Read) sur la réception de données valides et/ou les informations (Ready) sur la fin d'une transmission de données ont des états binaires.

9. Système (1) selon la revendication 8,
**caractérisé par le fait que**,
- lors de l'émission de données valides par les premiers moyens d'émission (DataOut), les informations (Enable) sur la validité des données (Data) sont émises par les quatrièmes moyens d'émission (DataEn_O) dans un état Bit1 ou dans un état Bit0.

10. Système (1) selon la revendication 9,
**caractérisé par le fait que**,
- lors de la réception de données (Data) par les premiers moyens de réception (DataIn) et lors de la réception d'informations (Enable) sur la validité des données (Data) dans un état haut par les quatrièmes moyens de réception (DataEn_I), une impulsion dans un état Bit1 ou dans un état Bit0 est émise comme information (Read) concernant la réception de données valides par les deuxièmes moyens d'émission (DataRd_O).

11. Système (1) selon une ou plusieurs des revendications 8 à 10,
**caractérisé par le fait que**,
- après la fin de l'émission de données (Data) par les premiers moyens d'émission (DataOut) et après la réception valide des données (Data) par les premiers moyens de réception (DataIn), les informations (Ready) sur la fin d'une transmission de données dans un état Bit1 ou dans un état Bit0 sont émises par les troisièmes moyens d'émission (Ready_O).

12. Système (1) selon une ou plusieurs des revendications précédentes,
**caractérisé par le fait que**
- les au moins deux modules (2, 3, ..., 9) branchés en série peuvent être sélectionnés parmi la totalité d'une liste de modules qui comprend les modules suivants :
- module (2) pour l'accès à une unité de mémoire (10),
- module (3) avec un codeur CVSD et/ou un décodeur CVSD,
- module avec une unité ADPCM,
- module (4) avec un générateur CRC et/ou un dispositif de traitement CRC,
- module (5) pour le cryptage et/ou le décryptage de données (Data),
- module (6) avec un brouilleur et/ou un débrouilleur,
- module (7) avec une unité FEC,
- module (8) avec une mémoire FIFO, et
- module (9) avec une unité pour l'émission et/ou la réception de données (Data),
- les modules sélectionnés (2, 3, ..., 9) étant notamment intégrés sur un substrat fixe commun.

13. Procédé pour la transmission de données et d'informations entre un premier module (A) et un deuxième module voisin (B), lesquels sont contenus dans un système (1) pour produire et/ou traiter des salves de données avec au moins deux modules (2, 3, ..., 9) branchés en série, dans lequel
- des données (Data) sont transmises du premier module (A) au deuxième module (B),
- des informations (Read) sur la réception de données valides sont transmises du deuxième module (B) au premier module (A), et
- des informations (Ready) sur la fin d'une transmission de données, notamment la fin de la transmission d'un paquet de données, sont transmises du premier module (A) au deuxième module (B),
**caractérisé par le fait que**
- des informations (Enable) sur la validité des données (Data) sont transmises du premier module (A) au deuxième module (B).

14. Procédé selon la revendication 13,
**caractérisé par le fait que**
- le premier module (A) et le deuxième module (B) sont reliés entre eux par des câblages fixes, des liaisons pour la transmission de données et d'informations entre le premier module (A) et le deuxième module (B) pouvant être spécifiées par un logiciel qui affecte notamment des registres à cet effet.

15. Procédé selon la revendication 13 ou 14,
**caractérisé par le fait que**
- une unité génératrice d'horloge produit un signal d'horloge (CLK26) qui a notamment une horloge de 26 MHz.

16. Procédé selon la revendication 15,
**caractérisé par le fait que**
- une transmission de données (Data) et/ou d'informations (Enable, Read, Ready) commence et finit avec un signal d'horloge (CLK26) de l'unité génératrice d'horloge.

17. Procédé selon la revendication 15 ou 16,
**caractérisé par le fait que**
- le signal d'horloge (CLK26) est un signal rectangulaire binaire.

18. Procédé selon la revendication 17,
**caractérisé par le fait que**
- une transmission de données (Data) et/ou d'informations (Enable, Read, Ready) commence et finit avec une modification du signal rectangulaire binaire (CLK26) d'un état Bit0 à un état Bit1 ou d'un état Bit1 à un état Bit0.

19. Procédé selon une ou plusieurs des revendications 13 à 18,
**caractérisé par le fait que**
- les données (Data) comprennent des séquences de bits (bi).

20. Procédé selon une ou plusieurs des revendications 13 à 19,
**caractérisé par le fait que**
- les informations (Enable) sur la validité des données (Data) et/ou les informations (Read) sur la réception de données valides et/ou les informations (Ready) sur la fin d'une transmission de données ont des états binaires.

21. Procédé selon la revendication 20,
**caractérisé par le fait que**,
- lors de l'émission de données valides par le premier module (A), les informations (Enable) sur la validité des données (Data) sont émises par le premier module (A) dans un état Bit1 ou dans un état Bit0.

22. Procédé selon la revendication 21,
**caractérisé par le fait que**,
- lors de la réception de données (Data) par le deuxième module (B) et lors de la réception d'informations (Enable) sur la validité des données (Data) dans un état haut par le deuxième module (B), une impulsion dans un état Bit1 ou dans un état Bit0 est émise comme information (Read) concernant la réception de données valides par le deuxième module (B).

23. Procédé selon une ou plusieurs des revendications 20 à 22,
**caractérisé par le fait que**,
- après la fin de l'émission de données (Data) par le premier module (A) et après la réception valide des données (Data) par le deuxième module (B), les informations (Ready) sur la fin d'une transmission de données dans un état Bit1 ou dans un état Bit0 sont émises par le premier module (A).

24. Procédé selon une ou plusieurs des revendications 13 à 23,
**caractérisé par le fait que**
- les au moins deux modules (2, 3, ..., 9) branchés en série peuvent être sélectionnés parmi la totalité d'une liste de modules qui comprend les modules suivants :
- module (2) pour l'accès à une unité de mémoire (10),
- module (3) avec un codeur CVSD et/ou un décodeur CVSD,
- module avec une unité ADPCM,
- module (4) avec un générateur CRC et/ou un dispositif de traitement CRC,
- module (5) pour le cryptage et/ou le décryptage de données (Data),
- module (6) avec un brouilleur et/ou un débrouilleur,
- module (7) avec une unité FEC,
- module (8) avec une mémoire FIFO, et
- module (9) avec une unité pour l'émission et/ou la réception de données (Data),
- les modules sélectionnés (2, 3, ..., 9) étant notamment intégrés sur un substrat fixe commun.
